# EUROPEAN PATENT SPECIFICATION

(11) **EP 2 575 091 B1**
(45) Date of publication and mention of the grant of the patent: **15.04.2015**
(21) Application number: 12183912.0
(22) Date of filing: 11.09.2012
(51) Int. Cl.: G06Q 10/02, G07C 9/00, B60R 25/20

(54) **Unattended fleet vehicle security system and method**
Unbeaufsichtigtes Fahrzeugsicherheitssystem und -verfahren
Système et procédé de sécurité automatique de véhicule de parc

(30) Priority: 29.09.2011 US 201113248374
(43) Date of publication of application: 03.04.2013
(73) Proprietor: Delphi Technologies, Inc., Troy, MI 48007 (US)
(72) Inventor: Tieman, Craig A., Westfield, IN Indiana 46074 (US)
(74) Representative: Neill, Andrew Peter

(56) References cited:
- EP-A2- 1 128 335
- US-A1- 2011 060 480
- US-A1- 2011 112 969
- US-B1- 6 429 768

## Description

### TECHNICAL FIELD OF INVENTION

This disclosure generally relates to a system and method to prevent unauthorized access or use of a vehicle, and more particularly relates to an in-vehicle security module that receives an authorization signal from the internet server and allows authorized access to the vehicle if the authorization signal is received.

### BACKGROUND OF INVENTION

Vehicle fleets that either rent their vehicles to the general public or have a fleet of vehicles that are shared among multiple employees desire a way to allow authorized drivers to access the vehicles without the undesirable expense of on-site personnel or other related infrastructure costs. For example, businesses operating car rental fleets at small airports have expressed a desire to establish unattended rental lots. Systems have been proposed that require a wired interface between a control module and a diagnostic bus or a controller area network (CAN) bus within the vehicle, but such systems require complicated installation procedures to make the wired connections. European Patent application EP1128335 describes an access control system according to the preamble of claim 1, which uses a transponder and has remote monitoring. US Patent Application Pub. US2001/0060480 describes a mobile device application for communicating with vehicles. And US Patent Application Pub US2001/0112969 describes a vehicle access control services platform.

### SUMMARY OF THE INVENTION

The invention comprises an in-vehicle security module configured to be installed in a vehicle and allow authorized access to the vehicle, said in-vehicle security module characterized in comprising: a transceiver configured to receive an authorization signal from an internet server; a keyless entry transmitter configured to wirelessly communicate with a keyless entry system of the vehicle in a manner effective to allow access to the vehicle if the authorization signal is received; and wherein the in-vehicle security module further comprises an interference device configured to interfere with a determination by a vehicle immobilizer that an ignition key is an authorized key if the authorization signal has not been received, whereby the interference device prevents the immobilizer from determining that the key is an authorized key, thereby preventing starting of the vehicle.

The in-vehicle security module may be configured to communicate with a radio frequency identification (RFID) tag reader configured to be installed on the vehicle and receive the personal identity from a RFID transponder.

The transceiver of the in-vehicle security module may be configured to send the personal identity to the internet server via the transceiver, and receive the authorization signal from the internet server.

The keyless entry transmitter may be configured to transmit a keyless entry signal to a vehicle keyless entry system.

The processor may be configured to communicate with a diagnostic bus of the vehicle to determine a vehicle identity.

In another aspect is provided a communication system to allow authorized access to a vehicle, said communication system comprising an internet server configured to determine if access should be authorized based on a personal identity of a person; a mobile communication device configured to communicate the personal identity to the internet server; and an in-vehicle security module as above.

In another aspect is provided a method to allow authorized access to a vehicle, said method comprising: storing a personal identity of a person; determining a vehicle identity of a vehicle; sending the personal identity and the vehicle identity to an internet server receiving an authorization signal if the personal identity should be authorized to access the vehicle; and transmitting wirelessly a keyless entry signal to a keyless entry system of the vehicle to allow access to the vehicle if the authorization signal is received, and interfering with a determination by a vehicle immobilizer that an ignition key is an authorized key if the authorization signal has not been received, so as to prevent the immobilizer from determining that the key is an authorised key, thereby prevent starting of the vehicle.

The step of storing the personal identity may include programming the personal identity on a radio frequency identification (RFID) transponder; and the method further comprises retrieving the personal identity from the radio frequency identification (RFID) transponder.

The step of determining a vehicle identity may include receiving the vehicle identity by a mobile communication device.

The method further comprises retrieving the personal identity from the internet server.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is diagram of a communication system in accordance with one embodiment;
Fig. 2 is a flow chart of a method to operate the communication system in Fig. 1 in accordance with one embodiment;
Fig. 3 is a flow chart of a method to operate the communication system in Fig. 1 in accordance with one embodiment; and
Fig. 4 is a flow chart of a method to operate the communication system in Fig. 1 in accordance with one embodiment.

### DESCRIPTION OF THE PREFERRED EMBODIMENTS

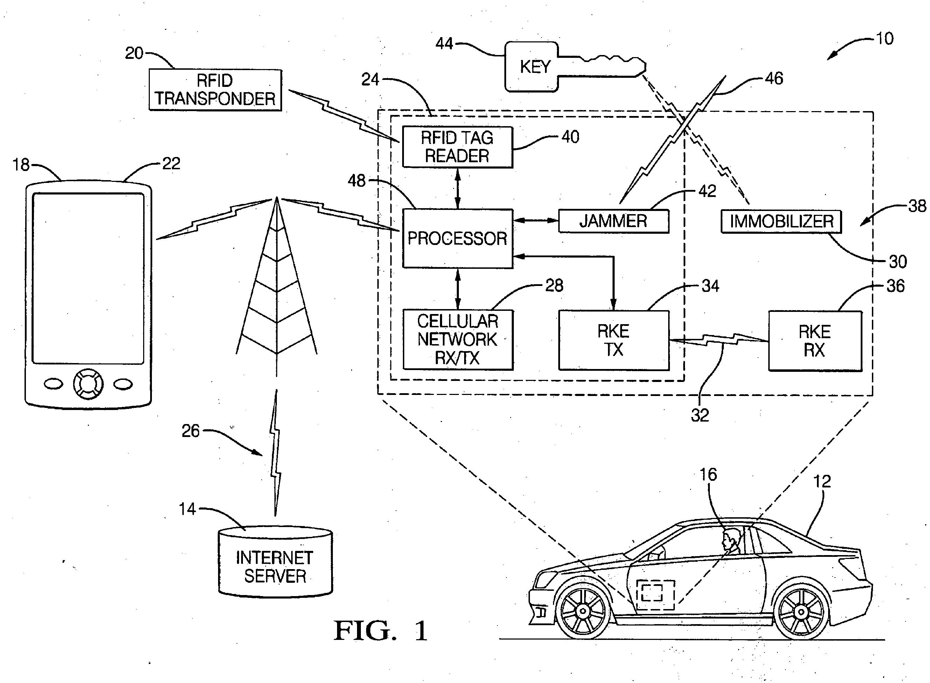

Fig. 1 illustrates a non-limiting example of a communication system 10 that in general is configured to allow authorized access to a vehicle 12. As used herein, access to the vehicle 12 includes, but is not limited to, entering the vehicle 12 and driving the vehicle 12. As will become apparent, the communication system 10 and a corresponding method may be useful to secure the vehicle 12 for an unmanned vehicle rental fleet facility, or an unmanned employee vehicle fleet. The communication system 10 includes an internet server 14 configured to determine if access to the vehicle 12 should be authorized based on a personal identity of a person 16. The personal identity of the person 16 may include, for example, a name, mailing address, credit card number, employee identification number, or other information useful to determine if the person 16 should be allowed to enter or drive the vehicle 12. This personal identity information may be compared to information previously stored on the internet server 14 as part of a customer profile of the person 16. Alternatively, the personal identity may be information communicated to the internet server 14 by a person requesting that access to the vehicle 12 be authorized, such a vehicle rental customer using a smart phone executing a software application.

For either instance, the communication system 10 includes a mobile communication device 18 configured to directly or indirectly communicate the personal identity to the internet server. For example, the mobile communication device 18 may be a radio frequency identification (RFID) transponder 20 and the personal identity may be stored on the RFID transponder 20. The mobile communication device 18 may be a smart phone 22 or similar device, and driver authentication and or vehicle identity may be entered by way of a camera viewing a bar code, microphone, or touchscreen/keyboard to permit the input of information. It should be appreciated that the communication system 10 may operate to allow access to the vehicle 12 with a configuration that only uses the RFID transponder 20, or only uses the smart phone 22, or uses both the RFID transponder 20 and the smart phone 22 in various ways to keep the authorization process secure.

The communication system 10 includes an in-vehicle security module 24 configured to be installed on the vehicle 12. Preferably the in-vehicle security module 24 is configured so the installation process is quick and simple, and so does not require a complicated wired interconnection to the vehicle 12. Features that provide for simple installation of the in-vehicle security module 24 will become evident in the description to follow. The in-vehicle security module 24 includes a transceiver 28 such a cellular network transceiver as suggested in Fig. 1. Alternatively, the transceiver 28 may be a Wi-Fi type transceiver so the in-vehicle security module 24 can communicate more directly with the internet server 14 when the vehicle 12 is located where wireless Wi-Fi access is available. For either case, the in-vehicle security module 24 is configured to receive an authorization signal 26 from the internet server 14.

The authorization signal 26 may include instructions to unlock doors of the vehicle 12, or allow the vehicle 12 to start by transmitting a keyless entry signal 32 from a keyless entry transmitter 34 to a keyless entry receiver 36, and/or may disable a vehicle immobilizer 30, both of which may be part of a keyless entry system 38. By this, the in-vehicle security module 24 is configured to communicate with a keyless entry system of the vehicle 12 in manner effective to allow access to the vehicle 12 if the authorization signal 26 is received. By equipping the in-vehicle security module 24 with the keyless entry transmitter 34, the in-vehicle security module 24 is able to operate security aspects of the vehicle 12 without having a wired connection to the vehicle and so installation of the in-vehicle security module 24 is simplified.

The keyless entry transmitter 34 may be integrated into the in-vehicle security module 24, or may be detachable from the in-vehicle security module 24 so that when, for example, access is authorized and the vehicle doors are unlocked, the person 16 can enter the vehicle, have a key and the keyless entry transmitter available in the vehicle so the person can drive and later secure the vehicle 12 when the person 16 is away from the area where the fleet of vehicles is stored. As suggested above, the communication system 10 or the in-vehicle security module 24 may be configured to communicate with an RFID transponder 20. Accordingly, the in-vehicle security module 24 may be equipped with or coupled to a radio frequency identification (RFID) tag reader 40. In general, the RFID tag reader is configured to communicate with a RFID transponder 20 so personal identity can be received from the RFID transponder 20, and communicated to the internet server 14 via the RFID tag reader 40.

As suggested above, the in-vehicle security module 24 may include a transceiver 28 (e.g. cellular network or Wi-Fi) configured to send the personal identity to the internet server 14 via the transceiver 28, and receive the authorization signal 26 from the internet server 14. The wireless nature of the transceiver 28 helps to simplify the installation of the in-vehicle security module 24 into the vehicle 12.

In an embodiment of the communication system 10, the mobile communication device 18, in particular the smart phone 22, may be configured to determine a vehicle identity of the vehicle 12 and communicate the vehicle identity to the internet server 14. This may help to keep track of which vehicles in the fleet are available, and which vehicles have been rented or are being used by employees. The vehicle identity may be determined by the smart phone 22 taking a picture of a bar code on the vehicle 12, or by way of the person 16 entering a vehicle identification number (VIN) into the smart phone 22 by way of a keypad. Alternatively, the smart phone 22 may communicate with the internet server 14 to determine which vehicles in the fleet are not reserved, and so the mobile communication device 18 (smart phone 22) may display a selection of vehicle identities available for use, and then communicate a selected vehicle identity selected by the person 16 to the internet server 14.

Many vehicle keys are equipped with security devices that communicate with a vehicle immobilizer 30 in the vehicle 12 in order to verify that an ignition key 44 being used is an authorized key. If the key is not equipped with a proper security device, the vehicle immobilizer 30 will prevent the vehicle 16 from starting, even if the key physically fits and is able to turn the vehicle ignition switch. The vehicle immobilizer 30 may immobilize the vehicle by turning off the vehicle's fuel pump, or disabling the vehicle's spark ignition system. The communication system 10 or the in-vehicle security module 24 includes an interference device such as a jammer 42 configured to interfere with a determination by a vehicle immobilizer 30 that an ignition key 44 is an authorized key if the authorization signal 26 has not been received. To interfere with the determination, the interference device or jammer 42 may emit a radio frequency (RF) signal 46 that prevents the vehicle immobilizer 30 from determining that the ignition key 44 is an authorized key, thereby preventing starting of the vehicle 12.

In order to coordinate the various communications or determine when an authorization signal 26 is received, the in-vehicle security module 24 may include a processor 48. The processor 48 may be a microprocessor or other control circuitry as should be evident to those in the art. The processor 48 may include memory, including non-volatile memory, such as electrically erasable programmable read-only memory (EEPROM) for storing one or more routines, thresholds and captured data. The one or more routines may be executed by the processor 48 to perform steps for determining if signals are received by the processor 48 as described herein.

An embodiment of the in-vehicle security module 24 may include a housing (not shown) and a connector (not shown) configured to plug into a vehicle diagnostic bus or diagnostic connector that is available on most vehicles. Such a connector may also provide a simple way to provide electrical power to the in-vehicle security module 24. The processor may be configured to communicate with the diagnostic bus of the vehicle to determine a vehicle identity as part of communications with the internet server for the purpose of determining if the person 16 is authorized to use the vehicle 12.

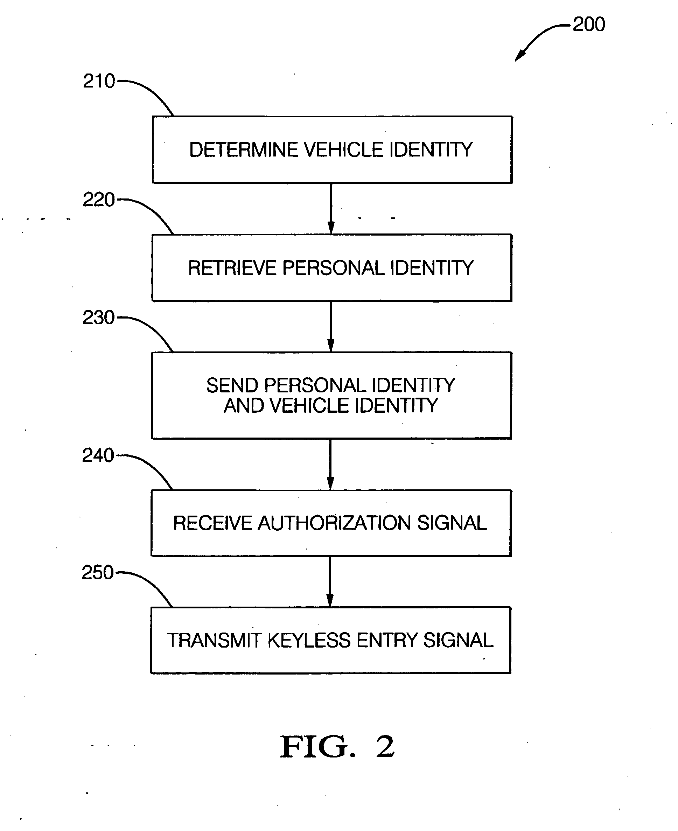

Fig. 2 illustrates a method 200 to allow authorized access to a vehicle 12.

Step 210, DETERMINE VEHICLE IDENTITY, may include determining a vehicle identity by using a camera on a smart phone 22 to capture an image of a bar code on the vehicle 12, or selecting from a list of available vehicles sent to the smart phone 22 from the internet server.

Step 220, RETRIEVE PERSONAL IDENTITY, may include retrieving the personal identity of the person 16 from the internet server 14. Step 220 may also include storing or programming personal identity of a person 16 on a RFID transponder 20, on a smart phone 22, or the internet server 14 so the personal identity is available when requested by Step 220. Step 220 may also include retrieving the personal identity from the radio frequency identification (RFID) transponder. It is recognized that the order of Step 210 and Step 220 may be reversed.

Step 230, SEND PERSONAL IDENTITY AND VEHICLE IDENTITY, may include sending the personal identity and the vehicle identity to the internet server 14.

Step 240, RECEIVE AUTHORIZATION SIGNAL, may include receiving an authorization signal indicating that the personal identity sent in step 230 should be authorized to access the vehicle 12.

Step 250, TRANSMIT KEYLESS ENTRY SIGNAL, may include transmitting a keyless entry signal 32 to a keyless entry system 38 of the vehicle 12 to allow access to the vehicle if the authorization signal 26 is received.

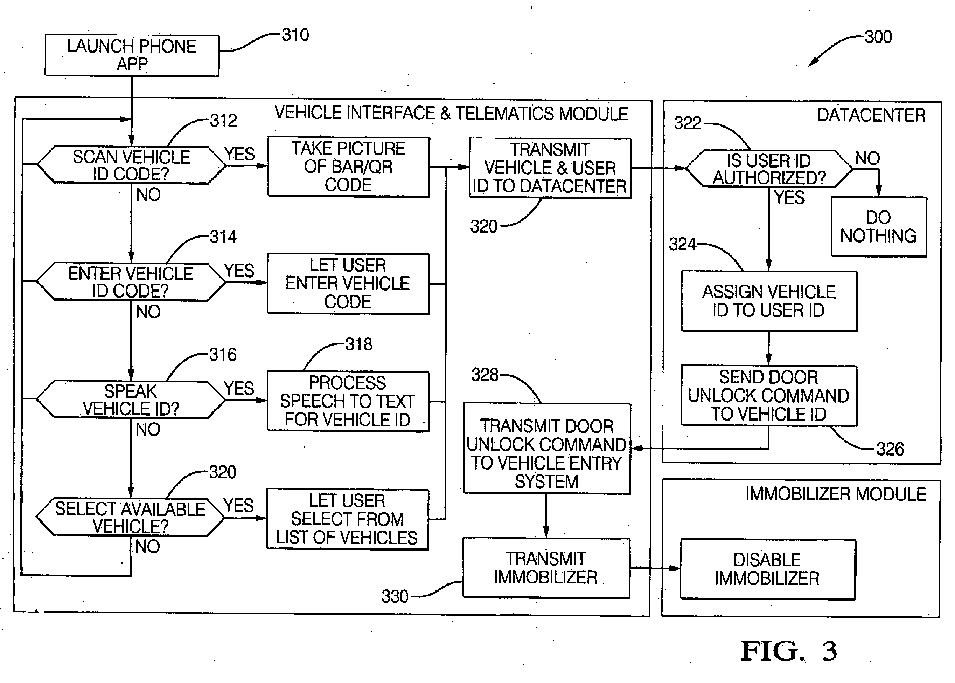

Fig. 3 illustrates a method 300 of operating a communication system 10 that includes a smart phone 22. The following example is given for the purpose of further explanation and not limitation. This example presumes that the vehicle 12 is locked. As the person 16 approaches the vehicle 12, the person 16 launches a smart phone app 310 on the smart phone 22 that offers four methods to select a vehicle to drive: Scan a vehicle bar code 312 using a camera in the smart phone 22, enter a vehicle code 314 or identification number using a keyboard function on the smart phone, speak vehicle code 316 or identification number into a microphone on the smart phone 22 and process the voice signal into text 318, or select vehicle from a list of available vehicles 320.

The app transmits the User ID and selected Vehicle ID 320 to an internet server 14 or datacenter for driver authentication. The datacenter receives the User and Vehicle IDs, checks internal database for an authenticated User 322 and, if authenticated, assigns Vehicle ID to User ID 324. The datacenter transmits or sends a door unlock command 326 to the in-vehicle security module 24. The in-vehicle security module 24 operates a keyless entry transmitter 34 to transmit a door unlock command 328 to the keyless entry system 38 to unlock the driver's door. The in-vehicle security module 24 transmits an immobilizer disable command 330 to the vehicle immobilizer 30. The person 16 opens the vehicle door, retrieves the ignition key 44 from within the vehicle 12 and starts the vehicle 12.

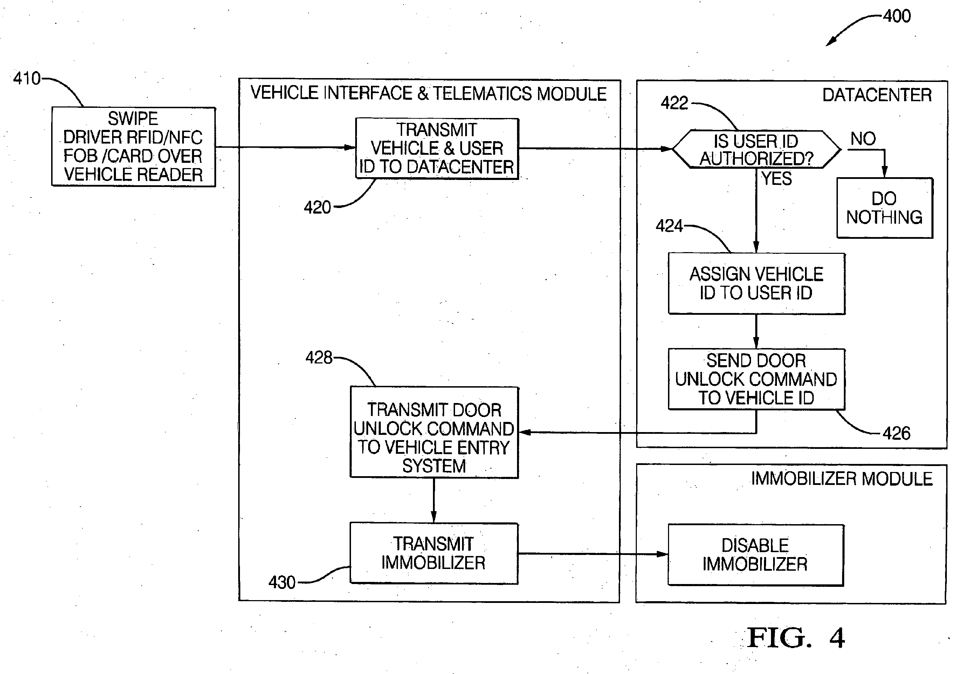

Fig. 4 illustrates a method 400 of operating a communication system 10 that includes a RFID transponder 20 or similar device such as near field communication (NFC) fob, or a configuration where the vehicle is equipped with at bar code reader (not shown) configured to read a bar code on an identification card or displayed on a smart phone 22 and presented by the person 16. The following example is given for the purpose of further explanation and not limitation. This example presumes that the vehicle 12 is locked. The person 16 approaches the locked vehicle and passes 410 an RFID transponder 20 or NFC fob or card over a vehicle-mounted RFID reader 40, or NFC reader. The vehicle telematics unit or the in-vehicle security module 24 transmits the User ID and selected Vehicle ID 420 to the datacenter or internet server 14 for driver authentication. The datacenter receives the User and Vehicle IDs, checks internal database for an authenticated User and, if authenticated 422, assigns Vehicle ID to User ID 424. The datacenter transmits a door unlock command 426 to the vehicle telematics unit. The vehicle telematics unit transmits a door unlock command 428 to the vehicle entry system to unlock the driver's door. The vehicle telematics unit transmits an immobilizer disable command 430 to the immobilizer defeat module. The person 16 opens the vehicle door, retrieves the ignition key 44 from within the vehicle and starts the vehicle 12.

Accordingly, a communication system 10, a in-vehicle security module 24 for the communication system 10 and a method 200, 300, 400 of allowing authorized access to enter or drive a vehicle is provided. By equipping the communication system 10, or the in-vehicle security module 24 with a keyless entry transmitter 34, installation into the vehicle 12 is simplified since a wired interface to the vehicle's security system is not required. The communication system 10 or the in-vehicle security module 24 may be configured for a specific vehicle by connecting the in-vehicle security module 24 to a personal computer executing configuration software, or may be performed in the field by way of the in-vehicle security module 24 using the transceiver 28 to communicate with the internet server 14 in order to download configuration information. Other ways to configure the in-vehicle security module 24 for a particular vehicle will be apparent to those skilled in the art.

While this invention has been described in terms of the preferred embodiments thereof, it is not intended to be so limited, but rather only to the extent set forth in the claims that follow.

## Claims

1. An in-vehicle security module (24) configured to be installed in a vehicle (12) and allow authorized access to the vehicle (12), said in-vehicle security module (24) comprising:
a transceiver (28) configured to receive an authorization signal (26) from an internet server (14);
**characterized by**:
a keyless entry transmitter (34) configured to wirelessly communicate with a keyless entry system (38) of the vehicle (12) in a manner effective to allow access to the vehicle (12) if the authorization signal (26) is received; and
wherein the in-vehicle security module (24) further comprises an interference device configured to interfere with a determination by a vehicle immobilizer (30) that an ignition key (44) is an authorized key if the authorization signal (26) has not been received, whereby the interference device prevents the immobilizer from determining that the key is an authorized key, thereby preventing starting of the vehicle (12).

2. The in-vehicle security module (24) in accordance with claim 1, wherein the in-vehicle security module (24) is configured to communicate with a radio frequency identification (RFID) tag reader (40) configured to be installed on the vehicle (12) and receive the personal identity from a RFID transponder (20).

3. The in-vehicle security module (24) in accordance with claim 2, wherein said transceiver of the in-vehicle security module (28) is configured to send the personal identity to the internet server (14) via the transceiver (28), and receive the authorization signal (26) from the internet server (14).

4. The in-vehicle security module (24) in accordance with any of the preceding claims, wherein the keyless entry transmitter (34) is configured to transmit a keyless entry signal (32) to a vehicle (12) keyless entry system (38).

5. The in-vehicle security module (24) in accordance with any of the preceding claims, wherein the processor (48) is configured to communicate with a diagnostic bus of the vehicle (12) to determine a vehicle (12) identity.

6. A communication system (10) to allow authorized access to a vehicle (12), said communication system (10) comprising:
an internet server (14) configured to determine if access should be authorized based on a personal identity of a person (16);
a mobile communication device (18) configured to communicate the personal identity to the internet server (14); and **characterized by**
an in-vehicle security module (24) as set in any of the preceding claims.

7. A method (200) to allow authorized access to a vehicle (12), said method (200) comprising:
storing a personal identity of a person (16);
determining (210) a vehicle identity of a vehicle (12);
sending (230) the personal identity and the vehicle identity to an internet server (14);
receiving (240) an authorization signal (26) if the personal identity should be authorized to access the vehicle (12); and
transmitting (250) wirelessly a keyless entry signal (32) to a keyless entry system (38) of the vehicle (12) to allow access to the vehicle (12) if the authorization signal (26) is received, and
interfering with a determination by a vehicle immobilizer that an ignition key is an authorized key if the authorization signal has not been received, so as to prevent the immobilizer from determining that the key is an authorised key, thereby prevent starting of the vehicle.

8. The method (200) in accordance with claim 7, wherein the step of storing the personal identity includes programming the personal identity on a radio frequency identification (RFID) transponder (20); and the method (200) further comprises retrieving the personal identity from the radio frequency identification (RFID) transponder (20).

9. The method (200) in accordance with any of the claim 7 or 8, wherein the step of determining (210) a vehicle identity includes receiving the vehicle identity by a mobile communication device (18).

10. The method (200) in accordance with claim 9, wherein the method (200) further comprises retrieving (220) the personal identity from the internet server (14).

## Patentansprüche

1. Bord-Fahrzeugsicherheitsmodul (24), das zum Einbau in ein Fahrzeug (12) und zum Gewähren von autorisiertem Zugang zu dem Fahrzeug (12) konfiguriert ist, wobei das genannte Bord-Fahrzeugsicherheitsmodul (24) Folgendes aufweist:
einen Transceiver (28), der zum Empfangen eines Autorisierungssignals (25) von einem Internetserver (14) konfiguriert ist,
**gekennzeichnet durch**:
einen Sender für schlüssellosen Zugang (34), der konfiguriert ist, um mit einem schlüssellosen Zugangssystem (38) des Fahrzeugs (12) auf eine Weise drahtlos zu kommunizieren, die bewirkt, dass der Zugang zum Fahrzeug (12) gewährt wird, wenn das Autorisierungssignal (26) empfangen wird, und
wobei das Bord-Fahrzeugsicherheitsmodul (24) des Weiteren eine Störungsvorrichtung aufweist, die konfiguriert ist, um eine Ermittlung **durch** eine Fahrzeugwegfahrsperre (30), dass ein Zündschlüssel (44) ein autorisierter Schlüssel ist, zu stören, wenn das Autorisierungssignal (26) nicht empfangen wurde, so dass die Störungsvorrichtung die Wegfahrsperre daran hindert zu ermitteln, dass der Schlüssel ein autorisierter Schlüssel ist, wodurch das Starten des Fahrzeugs (12) verhindert wird.

2. Bord-Fahrzeugsicherheitsmodul (24) nach Anspruch 1, wobei das Bord-Fahrzeugsicherheitsmodul (24) zum Kommunizieren mit einem Funkfrequenz-Identifizierungs-Transponder- (RFID-Tag)-Lesegerät (40) konfiguriert ist, das zum Einbau im Fahrzeug (12) und zum Empfangen der persönlichen Kennung von einem RFID-Transponder (20) konfiguriert ist.

3. Bord-Fahrzeugsicherheitsmodul (24) nach Anspruch 2, wobei der genannte Transceiver des Bord-Fahrzeugsicherheitsmoduls (28) zum Senden der persönlichen Kennung über den Transceiver (28) zum Internetserver (14) und zum Empfangen des Autorisierungssignals (26) vom Internetserver (14) konfiguriert ist.

4. Bord-Fahrzeugsicherheitsmodul (24) nach einem der vorhergehenden Ansprüche, wobei der Sender für schlüssellosen Zugang (34) zum Senden eines Signals für schlüssellosen Zugang (32) zu einem schlüssellosen Zugangssystem (38) eines Fahrzeugs (12) konfiguriert ist.

5. Bord-Fahrzeugsicherheitsmodul (24) nach einem der vorhergehenden Ansprüche, wobei der Prozessor (48) konfiguriert ist, um mit einem Diagnostikbus des Fahrzeugs (12) zu kommunizieren, um eine Kennung des Fahrzeugs (12) zu ermitteln.

6. Kommunikationssystem (10) zum Gewähren von autorisiertem Zugang zu einem Fahrzeug (12), wobei das genannte Kommunikationssystem (10) Folgendes aufweist:
einen Internetserver (14), der konfiguriert ist, um auf der Basis einer persönlichen Kennung einer Person (16) zu ermitteln, ob Zugang autorisiert werden sollte,
eine Mobilkommunikationsvorrichtung (18), die konfiguriert ist, um dem Internetserver (14) die persönliche Kennung mitzuteilen, und **gekennzeichnet durch**
ein Bord-Fahrzeugsicherheitsmodul (24) nach einem der vorhergehenden Ansprüche.

7. Verfahren (200) zum Gewähren von autorisiertem Zugang zu einem Fahrzeug (12), wobei das genannte Verfahren (200) Folgendes aufweist:
Speichern einer persönlichen Kennung einer Person (16),
Ermitteln (210) einer Fahrzeugkennung eines Fahrzeugs (12),
Senden (230) der persönlichen Kennung und der Fahrzeugkennung an einen Internetserver (14),
Empfangen (240) eines Autorisierungssignals (26), wenn die persönliche Kennung für Zugang zum Fahrzeug (12) autorisiert sein sollte, und
drahtloses Senden (250) eines Signals für schlüssellosen Zugang (32) zu einem schlüssellosen 2ugangssystem (38) des Fahrzeugs (12), um Zugang zum Fahrzeug (12) zu gewähren, wenn das Autorisierungssignal (26) empfangen wird, und
Stören einer Ermittlung durch eine Fahrzeugwegfahrsperre, dass ein Zündschlüssel ein autorisierter Schlüssel ist, wenn das Autorisierungssignal nicht empfangen wurde, um die Wegfahrsperre daran zu hindern zu ermitteln, dass der Schlüssel ein autorisierter Schlüssel ist, wodurch das Starten des Fahrzeugs (12) verhindert wird.

8. Verfahren (200) nach Anspruch 7, wobei der Schritt des Speicherns der persönlichen Kennung das Programmieren der persönlichen Kennung an einem Funkfrequenz-Identifizierungs- (RFID)-Transponder (20) beinhaltet und das Verfahren (200) des Weiteren das Abrufen der persönlichen Kennung aus dem Funkfrequenz-Identifizierungs-(RFID)-Transponder (20) aufweist.

9. Verfahren (200) nach einem der Ansprüche 7 oder 8, wobei der Schritt des Ermittelns (210) einer Fahrzeugkennung das Empfangen der Fahrzeugkennung durch eine Mobilkommunikationsvorrichtung (18) beinhaltet.

10. Verfahren (200) nach Anspruch 9, wobei das Verfahren (200) des Weiteren das Abrufen (220) der persönlichen Kennung aus dem Internetserver (14) aufweist.

## Revendications

1. Module de sécurité embarqué sur véhicule (24) configuré pour être installé dans un véhicule (12) et permettre un accès autorisé au véhicule (12), ledit module de sécurité embarqué sur véhicule (24) comprenant :
un émetteur/récepteur (28) configuré pour recevoir un signal d'autorisation (26) depuis un serveur Internet (14) ;
**caractérisé par** :
un émetteur d'entrée sans clé (34) configuré pour communiquer sans fil avec un système d'entrée sans clé (38) du véhicule (12) d'une manière effective pour permettre l'accès au véhicule (12) si le signal d'autorisation (26) est reçu ; et
dans lequel le module de sécurité embarqué sur véhicule (24) comprend en outre un dispositif d'interférence configuré pour interférer avec une détermination par un dispositif d'immobilisation de véhicule (30) qu'une clé d'allumage (44) est une clé autorisée si le signal d'autorisation (26) n'a pas été reçu, grâce à quoi le dispositif d'interférence empêche au dispositif d'immobilisation de déterminer que la clé est une clé autorisée, empêchant ainsi le démarrage du véhicule (12).

2. Module de sécurité embarqué sur véhicule (24) selon la revendication 1, dans lequel le module de sécurité embarqué sur véhicule (24) est configuré pour communiquer avec un lecteur d'étiquettes (40) avec identification à radiofréquence (RFID) configuré pour être installé sur le véhicule (12) et recevoir l'identité personnelle depuis un transpondeur RFID (20).

3. Module de sécurité embarqué sur véhicule (24) selon la revendication 2, dans lequel ledit émetteur/récepteur (28) du module de sécurité embarqué sur véhicule est configuré pour envoyer l'identité personnelle au serveur Internet (14) via l'émetteur/récepteur (28) et recevoir le signal d'autorisation (26) depuis le serveur Internet (14).

4. Module de sécurité embarqué sur véhicule (24) selon l'une quelconque des revendications précédentes, dans lequel l'émetteur/récepteur (34) d'entrée sans clé est configurée pour émettre un signal d'entrée sans clé (32) vers un système d'entrée sans clé (38) du véhicule (12).

5. Module de sécurité embarqué sur véhicule (24) selon l'une quelconque des revendications précédentes, dans lequel le processeur (48) est configuré pour communiquer avec un bus de diagnostic du véhicule (12) pour déterminer une identité du véhicule (12).

6. Système de communication (10) pour permettre un accès autorisé à un véhicule (12), ledit système de communication (10) comprenant :
un serveur Internet (14) configuré pour déterminer si un accès devrait être autorisé sur la base d'une identité personnelle d'une personne (16) ;
un dispositif de communication mobile (18) configuré pour communiquer l'identité personnelle au serveur Internet (14) ; et
**caractérisé par**
un module de sécurité embarqué sur véhicule (24) selon l'une quelconque des revendications précédentes.

7. Procédé (200) pour permettre un accès autorisé à un véhicule (12), ledit procédé (200) comprenant les étapes consistant à :
stocker une identité personnelle d'une personne (16) ;
déterminer (210) une identité de véhicule d'un véhicule (12) ;
envoyer (230) l'identité personnelle et l'identité de véhicule à un serveur Internet (14) ;
recevoir (240) un signal d'autorisation (26) si l'identité personnelle devrait être autorisée d'accéder au véhicule (12) ; et
émettre (250) sans fil un signal d'entrée sans clé (32) à un système d'entrée sans clé (38) du véhicule (12) pour permettre l'accès au véhicule (12) si le signal d'autorisation (26) est reçu, et
interférer avec une détermination, par un dispositif d'immobilisation de véhicule, qu'une clé d'allumage est une clé autorisée si le signal d'autorisation n'a pas été reçu, de manière à empêcher au dispositif d'immobilisation de déterminer que la clé est une clé autorisée, empêchant grâce à cela le démarrage du véhicule.

8. Procédé (200) selon la revendication 7, dans lequel l'étape consistant à stocker l'identité personnelle inclut de programmer l'identité personnelle sur un transpondeur (20) d'identification à radiofréquence (RFID) ; et le procédé (200) comprend en outre de récupérer l'identité personnelle à partir du transpondeur (20) d'identification à radiofréquence (RFID).

9. Procédé (200) selon l'une quelconque des revendications 7 ou 8, dans lequel l'étape consistant à déterminer (210) une identité de véhicule inclut de recevoir l'identité du véhicule par un dispositif de communication mobile (18).

10. Procédé (200) selon la revendication 9, dans lequel le procédé (200) comprend en outre de récupérer (220) l'identité personnelle depuis le serveur Internet (14).
